# EUROPEAN PATENT APPLICATION

(11) **EP 2 698 790 A2**
(43) Date of publication of application: **19.02.2014**
(21) Application number: 12770571.3
(22) Date of filing: 13.04.2012
(51) Int. Cl.: H01B 1/16, H01B 1/08, H01B 1/06, C04B 41/50

(54) **COMPOSITION OF AN ELECTRIC CONDUCTIVE PASTE THAT CAN BE CO-SINTERED AT HIGH TEMPERATURES AND THE INTEGRATION THEREOF INTO CERAMIC MATERIALS BASED ON PORCELAIN, STONEWARE, PORCELAIN STONEWARE OR THE LIKE**

(30) Priority: 14.04.2011 ES 201130594 P
(71) Applicant: Roca Sanitario, S. A., 08029 Barcelona (ES); Consejo Superior De Investigaciones Científicas, 28006 Madrid (ES)
(72) Inventor: GONZÁLEZ-JUÁREZ, Fernando, 08029 Barcelona (ES); DE ALBURQUERQUE SÁNCHEZ, Antonio Jorge, 08029 Barcelona (ES); BALCELLS VILLANUEVA, Jordi, 08029 Barcelona (ES); QUINTANA BARTUAL, Alberto, 08029 Barcelona (ES); CABALLERO CUESTA, Amador, 28006 Madrid (ES); PEITEADO LÓPEZ, Marco, 28006 Madrid (ES); JARDIEL RIVAS, María Teresa, 28006 Madrid (ES); VILLEGAS GRACIA, Marina Pilar, 28006 Madrid (ES); CABALLERO CUESTA, Ángel, 28006 Madrid (ES)
(74) Representative: Oficina Ponti, SLP
(86) International application number: PCT/ES2012/070249
(87) International publication number: WO 2012/140303

(57) **Abstract**

It comprises between 70 and 0 wt% of Pt, between 20 and 5 wt% of C, and between 10 and 95 wt% of WO₃ or WC in relation to the total weight of solids of the composition and an organic or aqueous-based vehicle, where said composition can be sintered at a temperature higher than 1000°C, in particular higher than 1200°C.

The invention also relates to a process for integrating said composition into a ceramic material based on porcelain, stoneware, porcelain stoneware and/or similar ceramics.

The invention further relates to the capacitive sensor obtained with said composition on a band made of a ceramic composition, and to the ceramic material said composition or said sensor integrates.

## Description

### FIELD OF THE INVENTION

The present invention relates to an electrically conductive composition in the form of paste that can be co-sintered with ceramic materials based on porcelain, stoneware, porcelain stoneware and/or similar ceramics.

The invention also relates to the use of said conductive composition in the form of paste for manufacturing of capacitive sensors and to the integration of said capacitive sensors into said ceramic materials.

### BACKGROUND OF THE INVENTION

The functionalization of ceramic elements with traditional applications in many cases involves the integration in the ceramic of other elements with the capacity of generating functional responses to certain situations or external stimuli. Traditional applications are understood as paving, floorings, sanitary ware, and/or the like made of enamelled ceramic materials based on porcelain, stoneware, porcelain stoneware and/or other similar ceramics. The integration of functional elements implies the use of materials that can be incorporated in the standard processing of these ceramic materials with traditional applications before their sintering, to later co-sinter them at high temperatures without modifying the final mechanical, chemical and aesthetic qualities of the enamelled ceramic piece, but giving it a functional response.

In general, conductive elements are incorporated in the ceramic element in the form of electrically conductive pastes. These pastes, formed by at least one organic or aqueous vehicle and a metal powder or semiconductor, are applied on the ceramic elements by printing techniques, screen printing, spray painting an the like, forming a conductive material with a certain design and/or a certain configuration. However, the conductive material often begins to contract at temperatures below those necessary to sinter the ceramic and in consequence a difference appears in the contraction between both materials that are translated into the formation of cracks, excessive contractions of the appearance of bubbles.

Thus, the US patent US2009272566 tries to avoid the problems of co-sintering between ceramic elements and conductive elements by the use of multilayer ceramic substrates. Said patent discloses a method of manufacturing a conductive paste in which composition metal powder particles, an organic vehicle, a glass frit and an inorganic component are used. The glass frit and the inorganic component have the function of controlling the sintering process of the metal powder particle which makes it possible to approximate the contraction of the ceramic elements to that of the conductive elements.

On the other hand, patent US2009011201 discloses a conductive paste which incorporates in its composition metal powder particles of Ag and Pd with a fine and controlled particle size, these particles having the function of controlling the sintering process of the conductive element, which allows adjusting its contraction behaviour to that of the ceramic components.

However, the compositions of conductive pastes of said US patents US2009272566 and US2009011201 are limited to a co-sintering with ceramics that only require temperatures lower than 1000°C to thus avoid a stress in the contact area between both materials and, in consequence, the appearance of structural defects, cracks or even the unsticking or delamination of the unit.

Although multilayer elements and conductive elements have been used in the state of the art, these have been for electronic components or ceramic devices of reduced size whose contraction behaviour during co-sintering are smaller due to the smaller size of the pieces obtained.

Therefore, the contraction problems in the integration of conductive elements have not yet been solved in the field of ceramics with traditional applications based on porcelain, stoneware, porcelain stoneware and/or the like wherein pieces of large size and volume are worked with. The problems arising from the co-sintering of a conductive material with ceramic materials which require temperatures higher than 1200°C for their sintering are still to be solved.

### BRIEF DESCRIPTION OF THE INVENTION

The objective of the present invention is to overcome the drawbacks mentioned in the state of the art.

The invention has the object, in a first aspect, of providing a conductive composition in the form of paste capable of being co-sintered with ceramic materials based on porcelain, stoneware, porcelain stoneware and/or similar ceramics at temperatures higher than 1200°C.

The invention also provides, in a second aspect, a process with two variants for the integration of said conductive composition in the form of paste into a ceramic material based on porcelain, stoneware, porcelain stoneware and/or similar ceramics.

Yet another aspect of the present invention is to provide a capacitive sensor with the conductive composition in the form of paste in accordance with the first aspect of the invention on a flexible band of ceramic composition.

And finally, in another aspect, the invention provides a ceramic material based on porcelain, stoneware, porcelain stoneware and/or similar ceramics which integrates said conductive composition in the form of paste or said capacitive sensor.

### BRIEF DESCRIPTION OF THE FIGURES

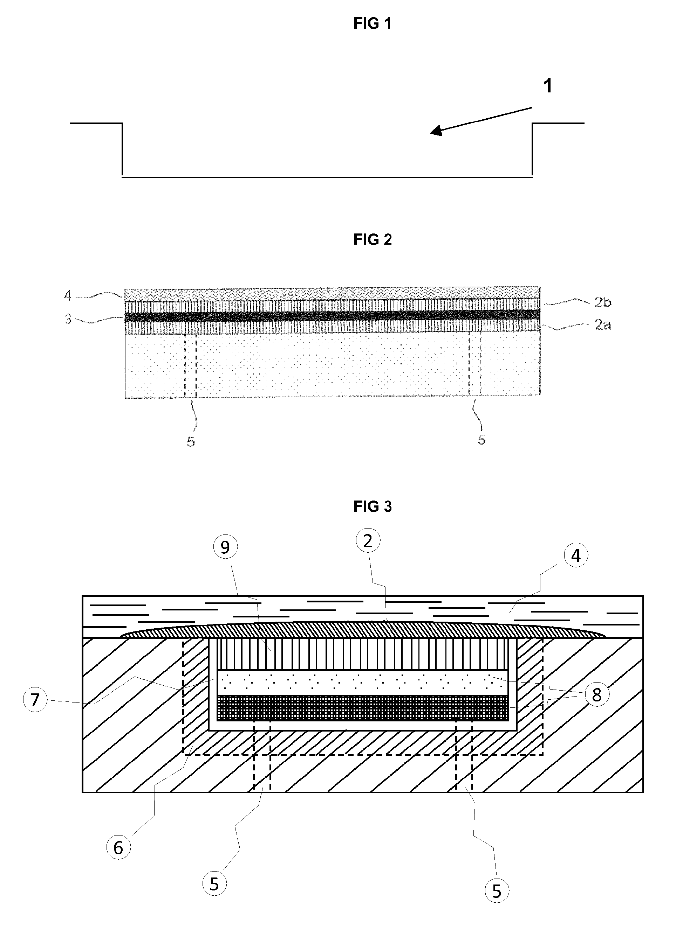

For a better understanding of all that disclosed, figures are attached wherein, diagrammatically and only as a non-limitative example, one embodiment of the invention is represented.
In said figures, figure 1 shows an area of lowering 1 in a part of the piece of ceramic material.
Figure 2 shows an embodiment of the invention, where 1 indicates the area of lowering in a part of the piece of ceramic material; 2 (2a and 2b) a layer of refractory material with respect to the enamel; 3 indicates a layer of the conductive composition in the form of paste according to one aspect of the invention; 4 indicates a layer of enamel or glaze; and 5 indicates the internal holes for connections with a capacitive sensor designed with the conductive composition in the form of paste.
Figure 3 shows an embodiment of the invention, where 1 indicates the area of lowering in a part of the piece of ceramic material; 6 indicates a layer of a waterproofing agent; 7 indicates a layer of an adhesive agent; 8 indicates a band of ceramic composition that holds the conductive composition in the form of paste according to one aspect of the invention; 9 indicates a layer of filling material; 4 indicates a layer of enamel or glaze; and 5 indicates the internal holes for connections with a capacitive sensor designed with the conductive composition in the form of paste on the band of ceramic composition.

### DETAILED DESCRIPTION OF THE INVENTION

In a first aspect, the invention provides a conductive composition in the form of paste comprising a metal powder which is Pt and a ceramic component as inorganic component consisting of WO₃ and a precursor of C.

Wolfram carbide, WC, has electrical conductivity in the order of that of platinum (between 1 and 2x10⁻⁷ ohm·m). Nevertheless, its direct use has the problematic aspect of its oxidation above 600°C. This problem can be controlled by generating a reducing atmosphere "in situ" during the thermal treatment stage through the use of a precursor of C. For example, from a mixture of wolfram carbide, WC, and graphite, C, a proportion of WC can be maintained thanks to the reducing local environment.

In the mixture, the graphite maintains the wolfram carbide WC. During heating at temperatures above 1000°C - the presence of excess graphite helps to avoid the subsequent oxidation of the WC.

The conductive composition in the form of paste may contain different precursors of W and of C, in particular the following composition can be prepared:
0 to 70 wt% of Pt,
up to 20 wt% of C or a precursor of C and
10 to 95 wt% of WC or WO₃
with respect to the total weight of solids of the composition and an organic vehicle or an aqueous-based vehicle, where said composition can be balanced to be sintered at a temperature higher than 1000°C, in particular, higher than 1200°C.

The organic or aqueous-based vehicle provides the suitable medium for obtaining a conductive composition in the form of paste and of easy application on the ceramic material.

Preferably, the conductive composition in the form of paste comprises:
30 to 50 wt% of Pt,
5 to 10 wt% of C or a precursor of C and
65 to 40 wt% of WC or WO₃
with respect to the total weight of solids of the composition and a vehicle, which may be water or an organic liquid. In the present invention, organic or aqueous-based vehicle is understood as a polar or apolar solvent such as ethanol, methyl ethyl ketone, acetone, benzene or any mixture thereof or water. It is added to the composition until obtaining a paste capable of being applied by screen printing, spray printing, pad printing, inkjet or any other printing technique available to a person skilled in the art.

In this way, the invention achieves an electrically conductive composition in the form of paste for its application and capable of withstanding temperatures higher than 1000°C, in particular higher than 1200°C, which enables its integration in ceramic materials based on porcelain, stoneware, porcelain stoneware and/or similar ceramics which generally require temperatures higher than 1,200°C for their sintering.

The conductive composition in the form of paste according to the invention overcomes the problems regarding the difference in contraction between the conductive material and the ceramic materials based on porcelain, stoneware, porcelain stoneware and/or the like for traditional applications. Thus, during the sintering stage, it avoids stress in the area of contact between both materials and, in consequence, the appearance of structural defects, cracks or even unsticking or delamination of the unit.

All of this is due to the combination and proportions of the different components of the conductive composition.

The authors of the present invention have found that platinum, Pt, as metal powder, enables obtaining pastes with high electrical conductivity and a good thermal and chemical stability to withstand the high thermal treatment temperatures required by traditional ceramics. The reactions are catalyzed through the use of platinum and there are no problems in terms of chemical compatibility after its co-sintering with traditional ceramics.

The use of the ceramic component in the composition overcomes the problems of physical compatibility during the co-sintering of platinum with traditional ceramics and, therefore, the addition of the ceramic component avoids the appearance of discontinuities in the layer of conductive paste applied and cracks close to the metal-ceramic interface.

The combination of the components in the conductive composition of the invention substantially reduces the differences in the coefficient of thermal expansion between the ceramic materials and the platinum and, in consequence, the contraction behaviours of both materials, ceramic and conductive element, approaches the maximum, during the thermal treatment at co-sintering temperatures higher than 1,000°C, in particular, higher than 1,200°C.

Advantageously, the ceramic component is WC or WO₃ and graphite, C, or a precursor of C which, during the co-sintering treatment with the ceramic, maintains stable the wolfram carbide, also called tungsten carbide, WC, which meets the desired requirements of compatibility and refractoriness and also has an electrical conductivity in the range of platinum (between 1 and 2x10⁻⁷ ohm.m).

The authors of the present invention have found that the addition of tungsten in volume, in the composition does not allow obtaining the same conductivity results as with WC, WO₃ and C in excess, since W generates macroscopic defects even in the presence of graphite.

Therefore, the invention provides a conductive composition capable of being co-sintered at high temperatures, higher than 1000°C, with enamelled ceramic materials based on porcelain, stoneware, porcelain stoneware and/or the like for traditional applications, without altering its manufacturing process, nor its mechanical, chemical and aesthetic characteristics.

Also advantageously, the conductive composition according to the invention has high electrical conductivity, high thermal and chemical stability and a good chemical and physical compatibility between the ceramic materials.

The present invention also has the object of providing a process for the integration of said conductive composition in the form of paste in ceramic materials based on porcelain, stoneware, porcelain stoneware and/or such like for traditional applications.

Thus, the invention provides a process for the integration of the conductive composition in the form of paste in ceramic materials with two variants. On the one hand, it provides the application of said conductive composition in the form of paste directly on the ceramic material and, on the other hand, it provides the application of said conductive composition in the form of paste, first, on a band of ceramic composition and, later, the incorporation of said band in the ceramic material.

Said processes give the ceramic materials for traditional applications functional characteristics without altering the manufacturing process of the ceramic materials, nor the mechanical, chemical, and aesthetic stresses thereof.

Therefore, the invention provides a process for the integration of the conductive composition in the form of paste in a ceramic material based on porcelain, stoneware, porcelain stoneware and/or such like for traditional applications comprising:
i) preparation of an area of the ceramic material (1) where one wants to add the conductive composition in the form of paste according to the invention;
ii) application of a layer of refractory material with respect to the enamel (2a) on said area of the ceramic material (1) to isolate the conductive composition in the form of paste from the ceramic material;
iii) application of the conductive composition in the form of paste (3) on the refractory material with the desired design of a capacitive sensor;
iv) application of a new layer of refractory material with respect to the enamel (2b) to isolate the conductive composition in the form of paste from the enamel or glaze subsequently applied;
v) application of enamel or glaze (4) throughout the area of the ceramic material (1), and
vi) co-sintering of the unit at a temperature higher than 1000°C, in particular higher than 1200°C.

After each stage it is preferable to leave the unit to dry at a temperature not higher than 60°C. The refractory material can be applied by painting or by any other technique available to a person skilled in the art. The conductive composition in the form of paste can be applied by screen printing, spray painting, pad printing, inkjet or any other technique available to a person skilled in the art.

The use of said layer of refractory material between the base ceramic and the conductive composition in the form of paste, as well as between the conductive composition in the form of paste and the enamel or glaze has the object of minimizing the interaction of the conductive composition in the form of paste due to its high chemical reactivity with traditional ceramics, i.e. ceramics based on porcelain, stoneware, porcelain stoneware and/or such like, as well as with the enamel covering said ceramics.

Alternatively, the process for the integration of the conductive composition in the form of paste in a ceramic material based on porcelain, stoneware, porcelain stoneware and/or such like for traditional applications comprises:
i) preparation of an area of the ceramic material (1) where one wants to add the conductive composition in the form of paste according to the invention;
ii) application of a waterproofing agent (6), followed by the application of an adhesive agent (7);
iii) adhesion of a band of ceramic composition (8) containing the conductive composition in the form of paste designed by way of a capacitive sensor, with the face of the conductive composition downward;
iv) application of a filling material (9) to obtain a regular and uniform surface before the application of the enamel or glaze;
v) application of enamel or glaze (4) throughout the area of the ceramic material (1), and
vi) co-sintering of the unit at a temperature higher than 1000°C, in particular, higher than 1200°C.

By preparation of the area of the ceramic material (1) where one wants to add the conductive composition in the form of paste according to the invention it is understood that a lowering is made in an area of the ceramic material by way of a box with a depth such that it allows the addition of the layers of different materials with or without ceramic band so that the last layer of enamel leaves said area (1) at the same surface level as the remainder of the piece of ceramic material. Said lowering can be obtained, for example, by casting a piece of ceramic material in a mould with the inverse form and measures of the desired lowering or box or, for example, it can be obtained by direct machining of the ceramic material. The preparation of said area (1) also includes the punching of the holes (5) in the positions wherein connections to the sensor are to be incorporated.

The application of the waterproofing agent, the adhesive agent or the filling material can be performed by painting or any other technique available to a person skilled in the art.

Preferably, said waterproofing agent is of water-soluble polymeric type and has the function of avoiding that the adhesive agent later applied is quickly absorbed by the ceramic material so that the application of the adhesive agent will not perform the function of sticking of the band of ceramic composition. Preferably, said adhesive agent is a porcelain paste.

The filling material is used in order to obtain a uniform and regular surface before application of the enamel. Preferably, said filling material must be capable of absorbing water and is formed by a ceramic paste with an organic ligand or it is formed by a paste based on porcelain with an enamel.

Said capacitive sensor is designed with the conductive composition in the form of paste according to the invention on a band of ceramic composition. The conductive composition in the form of paste is applied on the ceramic band by printing techniques such as screen printing, spray painting, pad printing, inkjet or any other techniques suitable for said purpose.

Since the ceramic band has the design of the capacitive sensor on one of its faces, said band must be stuck with the face containing the design downward, i.e. so that the capacitive sensor can take measurements of the variation in capacitance on the visible face of the ceramic material.

Preferably, the design of said capacitive sensor comprises two electrodes, connection tracks and at least two plates of the sensor disposed on a surface. Advantageously, the existence of a capacitive sensor obtained with the conductive composition in the form of paste according to the invention in a band of ceramic composition and integrated in a ceramic material makes it possible to detect the variation in the capacitance between the plates of the capacitive sensor with the consequent difference in potential which may be translated into an on or off signal by way of switch of any other connected element.

Thus, another object of the present invention is a capacitive sensor obtained with the conductive composition in the form of paste according to the invention on a band of ceramic composition.

Also, an object of the invention is the integration of the conductive composition in the form of paste according to the invention with the desired design of a capacitive sensor with the consequent co-sintering of the unit at a temperature generally higher than 1200°C.

Thus, the invention also provides a composition which enables the manufacturing of intelligent ceramics based on porcelain, stoneware, porcelain stoneware and/or such like. The integration of the conductive composition in the form of paste in a ceramic material enables the design of sensors in the ceramic material with functions such as opening or stopping the flow of water from a tap, to given an example.

Said processes give ceramic materials for traditional applications functional characteristics without altering the manufacturing process of the ceramic materials, nor the mechanical, chemical, and aesthetic stresses thereof.

### COMPOSITION COMPONENT TESTS

The conductive composition of the present invention comprises 70 to 0 wt% of Pt, 20 to 5 wt% of C and 10 to 95 wt% of WO₃ with respect to the total weight of solids of the composition and an organic or aqueous-based vehicle. The variation in the percentages of the composition components enables varying in controlled manner the electrical conduction of the conductive composition.

The authors of the present invention performed tests on the composition components finding that when the amount of platinum, Pt, in the composition was higher than 70 wt% the appearance of problems of discontinuities and the generation of cracks was observed between the conductive composition and the ceramic material. Furthermore, the reduction of platinum in the WO₃ + C mixture produced an increase in resistivity of the conductive composition, the presence of Pt continuing to be recommendable for the electric signal recording.

It was also observed that when the amount of C in the conductive composition in the form of paste of the present invention was higher than 20 wt%, the amount of gaseous CO₂ generated during the reduction process in the reaction between the components Pt + WO₃ + C was too high and was translated into the generation of defects, bubbles and pores, related to an incomplete elimination of the gases generated. When the amount of C was less than 5 wt%, the reducing atmosphere generated inside the conductive composition in the form of paste during the sintering was insufficient to cause the reduction of WO₃ to WC.

When the amount of WO₃ in the conductive composition in the form of paste of the present invention was less than 10 wt% it did not avoid the appearance of discontinuities and the generation of cracks between the conductive composition in the form of paste and the ceramic material. In contrast, for an amount of WO₃ higher than 95 wt%, the reducing atmosphere generated within composition during the sintering would be insufficient.

### RESISTIVITY TESTS

Resistivity tests were performed on different compositions of the conductive paste according to the present invention, giving the results included below.

**Table. Electrical resistance of the conductive compositions**

| Composition of the conductive paste | | | Resistivity (Ω·cm) |
|---|---|---|---|
| 60 % Pt | 35 % WO₃-WC | 5 % C | 1x10⁻⁶ |
| 50 % Pt | 44 % WO₃-WC | 6 % C | 4x10⁻⁶ |
| 40 % Pt | 55 % WO₃-WC | 5 % C | 5x10⁻⁵ |
| 35 % Pt | 55 % WO₃-WC | 10 % C | 6x10⁻⁵ |
| 30 % Pt | 65 % WO₃-WC | 5 % C | 9x10⁻⁵ |

### EXAMPLES

### Example 1- Conductive composition in the form of paste

Firstly, 0.6 g of Pt, 0.1 g of graphite and 1.3 g of WO₃ were homogenized in an agate mortar with a few drops of acetone as organic vehicle. The composition described in this example contains 30 wt% of Pt, 65 wt% of WO₃ and a 5 wt% of C. A total of 2 grams of metal powder were prepared.

5 ml of acetone, as vehicle, were added to the homogenized mixture of the components in powder form and the mixture was stirred during 10 minutes with a glass or plastic rod.

The conductive composition was then integrated in the form of paste in the ceramic material.

### Example 2 - Process without ceramic band (Figure 2)

Two holes were made in a plate of ceramic material formed with a lowering (1) completely passing through it (5), which served to incorporate connections in order to verify the electrical conductivity of the conductive composition in the form of paste of the invention.

Then, a layer of a paste of refractory material was applied on an area of the surface of the ceramic plate (1) with respect to the enamel (2a), covering it but not filling the holes made (5). The process was fast and simple and, after application, the unit was left to dry in an oven at a temperature of 60°C. Once the unit was dry, a layer of the composition in the form of the conductive paste prepared (3) was applied to the layer of refractory material with respect to the enamel (2a). The unit was again left to dry at 60°C.

Next, the layer of the composition in the form of conductive paste was completely covered with a new layer of refractory material with respect to the enamel (2b). Finally, after letting this last layer of refractory material dry at 60°C, a layer of enamel or glaze (4), which has been kept under stirring, was applied. The entire unit was sintered in an oven with the standard cycle for ceramic materials where the temperature exceeded 1200°C.

After the sintering stage, it was observed that the aesthetic characteristics of the enamelled ceramic product had not been altered and the conductivity of the conductive composition in the form of paste integrated through the holes made in the plate was measured, giving values between 10 and 20 ohm.m, which demonstrated the success of the functionalization of the ceramic plate in relation to the aspects of the present invention.

### Example 3 - Process with band of ceramic composition (Figure 3)

Initially, the same was done as in the previous example. Two holes were made in a plate of ceramic plate formed with a recess (1) completely passing through it (5), which served to incorporate connections in order to verify the electrical conductivity of the conductive composition in the form of paste of the invention.

Then, a waterproofing agent (2% solution of carboxymethylcellulose in water) was applied on an area of the surface of the stoneware plate (1) followed by the application of an adhesive agent (porcelain slip). The process was fast and simple. The band of ceramic composition was stuck on the adhesive agent with the capacitive sensor downward, pressing uniformly without leaving bubbles and next, a filling material was applied formed by a mixture of enamel and porcelain slip (50%) in order to level the surface before applying the enamel or glaze. Said filling material must be porous to facilitate the fixing of the enamel.

Finally, after leaving the unit to dry at 60°C, a layer of enamel or glaze (4), which has been kept under stirring, was applied. The entire unit was sintered in an oven with the standard cycle for ceramic materials where the temperature exceeded 1200°C.

After the sintering stage, it was observed that the aesthetic characteristics of the enamelled ceramic product had not been altered and the conductivity of the conductive composition in the form of paste integrated through the holes made in the stoneware plate was measured, giving values between 10⁻⁵-10⁻⁷ ohm.m, which demonstrated the success of the functionalization of the ceramic plate in relation to the aspects of the present invention.

Despite the fact a specific embodiment of the present invention has been described and represented, it is evident that for a person skilled in the art numerous variations and modifications can be introduced, or the details replaced by other technically equivalent ones, without departing from the scope of protection defined by the attached claims.

## Claims

1. Conductive composition in the form of paste comprising:
0 to 70 wt% of Pt,
up to 20 wt% of C and
10 to 95 wt% of WC or WO₃ with respect to the total weight of solids of the composition and an organic or aqueous-based vehicle, where said composition is capable of being sintered at a temperature higher than 1000°C.

2. Composition according to claim 1 comprising:
30 to 50 wt% of Pt,
5 to 10 wt% of C and
65 to 40 wt% of WC or WO₃ with respect to the total weight of solids of the composition and an organic or aqueous-based vehicle.

3. Composition according to any of claims 1 or 2, where said composition is capable of being sintered at a temperature higher than 1200°C.

4. Composition according to claim 1 or 3, where said organic or aqueous-based vehicle is a polar or apolar solvent.

5. Process for the integration of the conductive composition in the form of paste according to any of claims 1 to 4, in a ceramic material based on porcelain, stoneware, porcelain stoneware and/or the like comprising:
i) preparation of an area of the ceramic material (1) where one wants to add the conductive composition in the form of paste;
ii) application of a layer of refractory material with respect to the enamel (2a) on said area of the ceramic material to isolate the conductive composition in the form of paste from the ceramic material;
iii) application of the conductive composition in the form of paste (3) on the refractory material with the desired design of a capacitive sensor;
iv) application of a new layer of refractory material with respect to the enamel (2b) to isolate the conductive composition in the form of paste from the subsequent enamel or glaze;
v) application of enamel or glaze (4) throughout the area of the ceramic material (1), and
vi) co-sintering of the unit at a temperature higher than 1200°C.

6. Process for the integration of the conductive composition in the form of paste according to any of claims 1 to 4, in a ceramic material based on porcelain, stoneware, porcelain stoneware and/or the like comprising:
i) preparation of an area of the ceramic material (1) where one wants to add the conductive composition in the form of paste;
ii) application of a waterproofing agent (6), followed by the application of an adhesive agent (7);
iii) adhesion of a band of ceramic composition (8) containing the conductive composition in the form of paste designed by way of a capacitive sensor, with the face of the conductive composition downward;
iv) application of a filling material (9) to obtain a regular and uniform surface before the application of the enamel or glaze;
v) application of enamel or glaze (4) throughout the area of the ceramic material (1), and
vi) co-sintering of the unit at a temperature higher than 1200°C.

7. Process according to claim 6, where said waterproofing agent is of water soluble polymer-type.

8. Process according to claim 6, where said adhesive agent is a ceramic paste.

9. Process according to claim 6, where said filling material is a ceramic paste with an organic ligand or a ceramic paste with an enamel.

10. Process according to any of claims 5 or 6, where the application of each material must be performed by screen printing, spray painting, pad printing, inkjet or any other printing technique.

11. Capacitive sensor obtained from the conductive composition in the form of paste according to any of claims 1 to 4 in a band of ceramic composition.

12. Ceramic material based on porcelain, stoneware, porcelain stoneware and/or similar ceramics comprising integrating the conductive composition in the form of paste according to any of claims 1 to 4.
